(19) Europäisches Patentamt
European Patent Office
Office européen des brevets

(11) **EP 3 760 359 B1**

(12) **EUROPÄISCHE PATENTSCHRIFT**

(45) Veröffentlichungstag und Bekanntmachung des Hinweises auf die Patenterteilung:
**23.02.2022 Patentblatt 2022/08**

(21) Anmeldenummer: **20175632.7**

(22) Anmeldetag: **20.05.2020**

(51) Internationale Patentklassifikation (IPC):
**B23K 11/11** *(2006.01)* **B23K 11/25** *(2006.01)*
**B23K 11/31** *(2006.01)*

(52) Gemeinsame Patentklassifikation (CPC):
**B23K 11/115; B23K 11/255; B23K 11/311; B23K 11/314**

(54) **SCHWEISSSTEUERUNG FÜR EIN SCHWEISSWERKZEUG, SCHWEISSANLAGE UND VERFAHREN ZUR KRAFTREGELUNG EINES SCHWEISSWERKZEUGS**

WELDING CONTROL FOR A WELDING TOOL, WELDING INSTALLATION, AND METHOD FOR CONTROLLING THE FORCE OF A WELDING TOOL

COMMANDE DE SOUDAGE POUR UN OUTIL DE SOUDAGE, INSTALLATION DE SOUDAGE, ET PROCÉDÉ DE RÉGULATION DE LA FORCE D'UN OUTIL DE SOUDAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.07.2019 DE 102019209737**

(43) Veröffentlichungstag der Anmeldung:
**06.01.2021 Patentblatt 2021/01**

(73) Patentinhaber: **Robert Bosch GmbH**
**70442 Stuttgart (DE)**

(72) Erfinder:
• **Zhang, Xinmei**
**97840 Hafenlohr (DE)**
• **Stolze, Josephine**
**69412 Eberbach (DE)**

(56) Entgegenhaltungen:
**CN-A- 102 267 003    DE-A1- 10 060 055**
**DE-A1- 10 144 731    JP-A- H05 261 558**
**US-A1- 2011 146 363**

EP 3 760 359 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung bezieht sich auf eine Schweißsteuerung für ein Schweißwerkzeug, eine Schweißanlage, und ein Verfahren zur Kraftregelung eines Schweißwerkzeugs gemäß dem Oberbegriff der Ansprüche 1, 10 und 12.

Schweißwerkzeuge werden eingesetzt, um metallische Teile durch Schweißen zu verbinden. Beispielsweise werden in industriellen Anlagen, insbesondere in Fertigungsstraßen für Fahrzeuge usw., metallische Teile, insbesondere Bleche, durch Schweißen mit Hilfe eines Schweißwerkzeugs verbunden. Im automatisierten Karosserierohbau wird als Schweißwerkzeug eine Schweißzange mit Elektrodenkappen an Schweißelektroden eingesetzt. Beim Widerstandsschweißen werden die zu verschweißenden Bauteile an der zu verschweißenden Stelle mit zwei Schweißelektroden der Schweißzange zusammengedrückt. Dadurch wird ein Stromkreis gebildet, in welchem mit einem speziellen Stromverlauf zwischen den Bauteilen eine Schweißlinse ausgebildet wird. Beim Punkt-/ Widerstandsschweißen ist eine konstante Qualität der Schweißpunkte sehr wichtig.

Solche Schweißzangen sind beispielsweise als servoelektrische Schweißzangen ausgestaltet, um die Kraft zum Zusammendrücken der Schweißzange zum Bilden des Schweißpunkts aufzubringen. Ist die Kraft zu groß, die in die Schweißzange eingeleitet wird, wird die Schweißzange beschädigt. Daher ist der Einsatz eines Kraftreglers vorteilhaft, um die in die Schweißzange eingeleitete Kraft derart zu dosieren, dass keine Beschädigungen an der Schweißzange bzw. dem Schweißwerkzeug auftreten.

Möglich ist, die Zangenkraft durch einen positionsgeregelten Antrieb einzustellen, bei dem eine Zuordnung zwischen Sollkraft und Position der Achse ermittelt wird und eine einer Sollkraft zugordnete Sollposition vorgegeben wird. Jedoch ist es mit einer derartigen Kraftsteuerung nicht möglich, eine zeitlich veränderliche Sollkraft für einen Schweißvorgang je nach Wunsch vorzugeben. Zudem können Schweißspritzer zu einem nicht ausregelbaren Kraftabfall führen. Noch dazu kann ein Kraftanstieg durch die wärmebedingte Ausdehnung des Schweißpunktes nicht ausgeregelt werden. Außerdem ist es mit diesem Steuerungskonzept nicht möglich, das Zusammendrücken der zu verschweißenden Bauteile an der Fügestelle bei schlechter Passung zu gewährleisten. Bei einer schlechten Passung ist beim Schweißen ein Spalt zwischen den Bauteilen vorhanden. Sind die Bauteile Bleche, kann es zu Löchern in den Blechen kommen. Dies kann die Bauteile unbrauchbar machen.

DE 101 44 731 A1 (Basis für den Oberbegriff der Ansprüche 1, 10 und 12) beschreibt eine Schweißzange sowie Verfahren zur Beurteilung der Qualität einer Schweißverbindung, welches in einer Schließphase der Schweißzange eine Positionsregelung verwendet, wie zuvor beschrieben. Am Ende der Schließphase schaltet die Zangensteuerung in einer Elektrodenkraftaufbauphase von der Positionsregelung in eine Drehzahlregelung um. DE 100 60 055 A1 zeigt ein Meßsystem zur Prozessüberwachung und Qualitätssicherung beim Widerstandsschweißen. JP H05 261558 A bezieht sich auf eine Punktschweißanlage. CN 102 267 003 A bezieht sich auf eine Schweißanlage, insbesondere eine Widerstandspunktschweißanlage. Keines der genannten Dokumente zeigt ein Kraftregelmodul, wie in Anspruch 1 beschrieben.

Die Aufgabe der vorliegenden Erfindung besteht darin, eine Schweißsteuerung für ein Schweißwerkzeug und ein Verfahren zur Kraftregelung eines Schweißwerkzeugs bereitzustellen, mit welchen die zuvor genannten Probleme gelöst werden können. Insbesondere sollen eine Schweißsteuerung für ein Schweißwerkzeug und ein Verfahren zur Kraftregelung eines Schweißwerkzeugs bereitgestellt werden, bei welchen eine zeitlich veränderliche Sollkraft für einen Schweißvorgang vorgebbar ist und Störgrößen, wie Schweißspritzer oder die wärmebedingte Ausdehnung des Schweißpunktes, ausregelbar sind, so dass eine gleichbleibend hohe Qualität der Schweißverbindungen realisierbar ist.

Diese Aufgabe wird durch eine Schweißsteuerung für ein Schweißwerkzeug nach Anspruch 1 gelöst. Die Schweißsteuerung hat ein Kraftregelmodul zum Regeln eines Verlaufs einer Kraft, welche mindestens eine Elektrode eines Schweißwerkzeugs beim Herstellen einer Schweißverbindung auf mindestens ein Bauteil ausübt, wobei das Kraftregelmodul mindestens einen Drehzahlsollwert an eine Antriebseinrichtung des Schweißwerkzeugs ausgibt, um den Antrieb des Schweißwerkzeugs zum Aufbringen der Kraft mit einem Drehzahlregler der Antriebseinrichtung zu regeln, wie in Anspruch 1 beschrieben.

Die zuvor beschriebene Schweißsteuerung bietet die Möglichkeit, einen Schweißvorgang mit zeitlich veränderlicher Sollkraft durchzuführen, die individuell von Bediener vorgebbar oder parametrierbar ist. Hierbei ist eine automatische Parametrierung des Kraftregelmoduls möglich. Zusätzlich ist es möglich, Störgrößen auszuregeln, wie Schweißspritzer oder die wärmebedingte Ausdehnung des Schweißpunktes. Dadurch kann eine gleichbleibend hohe Qualität der Schweißverbindungen realisiert werden.

Damit kommt es nicht zu Beschädigungen an dem Schweißwerkzeug. Zudem kann auch sichergestellt werden, dass die gewünschte Qualität der Schweißverbindungen erzielt werden kann.

Als Folge davon sind weniger Schweißvorgänge abzubrechen, so dass Ausfälle der Schweißanlage in der industriellen Anlage minimiert werden können. Dadurch wird sowohl der von einer industriellen Anlage produzierte Ausschuss vermindert als auch der Ausstoß der industriellen Anlage erhöht. Zudem wird mit der Schweißsteuerung die Lebensdauer des Schweißwerkzeugs signifikant verbessert. Noch dazu wird erreicht, dass kostenintensive Serviceeinsätze zur Behebung von Störungen der Schweißanlage weniger häufig gefordert sind.

Insgesamt kann die Schweißsteuerung eine Steuerung des Schweißwerkzeugs derart bieten, dass eine hohe Qualität der mit dem Schweißwerkzeug hergestellten Schweißverbindungen sichergestellt wird.

Vorteilhafte weitere Ausgestaltungen der Schweißsteuerung sind in den abhängigen Patentansprüchen angegeben.

Das Kraftregelmodul hat gemäß einem Ausführungsbeispiel ein gleitendes Mittelwertfilter zur Glättung einer Regelabweichung vor Berechnung eines D-Anteils des PD-Reglers. Gemäß einer speziellen Ausgestaltung hat die Schweißsteuerung zudem ein Auswertemodul zur Auswertung der Regelung des Kraftregelmoduls, wobei das Auswertemodul ausgestaltet ist, mindestens einen Reglerparameter des Kraftregelmoduls zu ändern, wenn die Auswertung der Regelung des Kraftregelmoduls ergibt, dass der Verlauf der Kraft Schwingungen aufweist.

Gemäß einem Ausführungsbeispiel ist das Auswertemodul ausgestaltet, den zeitlichen Verlauf der Regelabweichung auszuwerten, um zu bestimmen, ob der Verlauf der Kraft Schwingungen aufweist. Hierbei ist das Auswertemodul ausgestaltet, den zeitlichen Verlauf der Regelabweichung in Bezug auf Periodendauer und Amplitude auszuwerten.

Gemäß einem anderen Ausführungsbeispiel ist das Auswertemodul ausgestaltet, das Frequenzspektrum der Ist-Kraft auf Maxima auszuwerten, um zu bestimmen, ob der Verlauf der Kraft Schwingungen aufweist.

Denkbar ist, dass das Auswertemodul ausgestaltet ist, die Proportionalverstärkung des PD-Reglers zu ändern, wenn die Auswertung der Regelung des Kraftregelmoduls ergibt, dass der Verlauf der Kraft Schwingungen aufweist.

Möglich ist, dass das Auswertemodul ausgestaltet ist, den derzeit ausgeführten Schweißverlauf abzubrechen, wenn die Auswertung der Regelung des Kraftregelmoduls ergibt, dass der Verlauf der Kraft Schwingungen aufweist.

Optional ist das Auswertemodul ausgestaltet, eine Meldung auszugeben, wenn die Auswertung der Regelung des Kraftregelmoduls ergibt, dass der Verlauf der Kraft Schwingungen aufweist.

Die zuvor beschriebene Schweißsteuerung kann Teil einer

Schweißanlage sein, wie im Anspruch 10 definiert, die zudem ein Schweißwerkzeug, das mindestens eine Elektrode zum Herstellen einer Schweißverbindung an mindestens einem Bauteil aufweist, und eine Antriebseinrichtung aufweist zum Antrieb des Schweißwerkzeugs zum Aufbringen einer Kraft, welche die mindestens eine Elektrode beim Herstellen einer Schweißverbindung auf das mindestens ein Bauteil ausübt, wobei die Antriebseinrichtung einen Drehzahlregler aufweist, wobei die Schweißsteuerung zur Steuerung eines Herstellens einer Schweißverbindung mit dem Schweißwerkzeug ausgestaltet ist.

Hierbei kann das Schweißwerkzeug ein Widerstandsschweißwerkzeug sein, das als Schweißzange mit zwei Elektroden ausgestaltet ist.

Die Aufgabe wird zudem durch ein Verfahren zur Kraftregelung eines Schweißwerkzeugs nach Anspruch 12 gelöst. Das Verfahren hat die Schritte: Regeln, mit einem Kraftregelmodul, eines Verlaufs einer Kraft, welche mindestens eine Elektrode eines Schweißwerkzeugs beim Herstellen einer Schweißverbindung auf mindestens ein Bauteil ausübt, wobei das Kraftregelmodul mindestens einen Drehzahlsollwert an eine Antriebseinrichtung des Schweißwerkzeugs ausgibt, und Regeln, mit einem Drehzahlregler der Antriebseinrichtung, des Antriebs des Schweißwerkzeugs zum Aufbringen der Kraft unter Verwendung des von dem Kraftregelmodul ausgegebenen mindestens einen Drehzahlsollwerts, wie in Anspruch 12 beschrieben.

Das Verfahren erzielt die gleichen Vorteile, wie sie zuvor in Bezug auf die Schweißsteuerung genannt sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Nachfolgend ist die Erfindung unter Bezugnahme auf die beiliegende Zeichnung und anhand von Ausführungsbeispielen näher beschrieben. Es zeigen:

Fig. 1 eine stark vereinfachte schematische Ansicht einer industriellen Anlage mit einer Schweißanlage gemäß einem ersten Ausführungsbeispiel, die eine Schweißsteuerung zum Steuern eines Schweißwerkzeugs verwendet;

Fig. 2 eine Schnittansicht von Schweißelektroden des Schweißwerkzeugs gemäß dem ersten Ausführungsbeispiel;

Fig. 3 eine vereinfachte Ansicht eines Regelkreises gemäß dem ersten Ausführungsbeispiel zur Regelung der Kraft, die bei Durchführen eines Schweißvorgangs von dem Schweißwerkzeug auf die Schweißstelle aufgebracht wird;

Fig. 4 eine vereinfachte Ansicht eines Regelkreises gemäß einem zweiten Ausführungsbeispiel zur Regelung der Kraft, die bei Durchführen eines Schweißvorgangs von dem Schweißwerkzeug auf die Schweißstelle aufgebracht wird;

Fig. 5 eine vereinfachte Ansicht eines Regelkreises gemäß einem dritten Ausführungsbeispiel zur Regelung der Kraft, die bei Durchführen eines Schweißvorgangs von dem Schweißwerkzeug auf die Schweißstelle aufgebracht wird;

Fig. 6 ein Flussdiagramm eines Verfahrens, das von der Schweißsteuerung gemäß dem dritten Ausführungsbeispiel bei Durchführen eines Schweißvorgangs oder Servicevorgangs zum Erkennen von Kraftschwingungen ausgeführt wird; und

Fig. 7 ein Flussdiagramm eines Verfahrens, das von einer Schweißsteuerung gemäß einem vierten Ausführungsbeispiel bei Durchführen eines Schweißvorgangs oder Servicevorgangs zum Erkennen von Kraftschwingungen ausgeführt wird.

In den Figuren sind gleiche oder funktionsgleiche Elemente, sofern nichts anderes angegeben ist, mit denselben Bezugzeichen versehen.

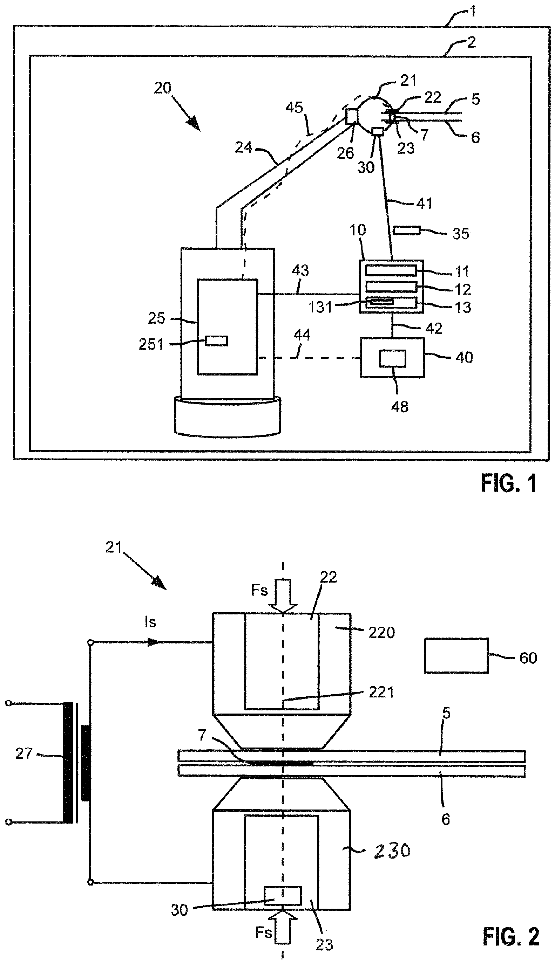

Fig. 1 zeigt eine industrielle Anlage 1 mit einer Schweißanlage 2, die zum Schweißen von mindestens einem metallischen Bauteil 5, 6 verwendet wird. Hierbei wird das mindestens eine metallische Bauteil 5, 6 mit mindestens einer Schweißverbindung 7 verbunden. Die mindestens eine Schweißverbindung 7 ist beispielsweise ein Schweißpunkt und/oder eine Schweißnaht. Hierbei können die zwei metallischen Bauteile 5, 6 oder auch nur zwei Ränder eines der Bauteile 5, 6 miteinander verbunden werden.

Die industrielle Anlage 1 ist beispielsweise eine Fertigungsstraße für Fahrzeuge, Möbel, Bauwerke, usw., in welcher die metallischen Bauteile 5, 6 geschweißt werden. Hierzu weist die Schweißanlage 2 eine Schweißsteuerung 10, eine Vorrichtung 20 zum Führen eines als Widerstandschweißwerkzeug ausgeführten Schweißwerkzeugs 21 mit zwei Schweißelektroden 22, 23, eine Erfassungseinrichtung 30 und eine Bedieneinrichtung 40 auf. Die Vorrichtung 20 wird von einer Steuereinrichtung 25 gesteuert. Zudem sind Kommunikationsleitungen 41 bis 45 vorgesehen, die insbesondere als Bussystem ausgeführt sein können. Mit der Bedieneinrichtung 40 sind Meldungen 48 ausgebbar, insbesondere Statusmeldungen und/oder Fehlermeldungen und/oder sonstige Informationen.

Die Vorrichtung 20 ist insbesondere ein Roboter. Die Bedieneinrichtung 40 ist beispielsweise als Tastatur und/oder eine Maus, ein Laptop, ein berührungsempfindlicher oder berührungsunempfindlicher Bildschirm, usw. oder deren Kombinationen ausführbar.

Gemäß Fig. 1 ist das Schweißwerkzeug 21 eine Schweißzange mit mindestens einer Elektrode 22, 23. Insbesondere ist das Schweißwerkzeug 21 eine servoelektrische Schweißzange. Bei dem Beispiel von Fig. 1 ist die Schweißzange als eine C-Zange ausgebildet. Hierbei ist es möglich, dass einer der Zangenarme, an dessen Ende beispielsweise die Elektrode 22 angeordnet ist, ein beweglicher Zangenarm ist und der andere Zangenarm, an dessen Ende beispielsweise die Elektrode 23 angeordnet ist, ein feststehender Zangenarm ist. An dem feststehenden Zangenarm kann die Erfassungseinrichtung 30, insbesondere ihr Kraftsensor, vorgesehen sein. Alternativ ist es möglich, die Schweißzange als eine X-Zange auszubilden. Die Elektroden 22, 23 sind bei den genannten Schweißzangen vorzugsweise als wassergekühlte Elektrodenschäfte ausgeführt.

Die Schweißsteuerung 10 dient zur Steuerung des Schweißwerkzeugs 21. Daher ist die Schweißsteuerung 10 mit dem Schweißwerkzeug 21 bzw. dessen elektrischen Komponenten über die Kommunikationsleitung 41 verbunden. Die Schweißsteuerung 10 ist außerdem über die Kommunikationsleitung 42 mit der Bedieneinrichtung 40 verbunden. Zudem empfängt die Schweißsteuerung 10 über die Kommunikationsleitung 41 Daten 35, die beim Betrieb des Schweißwerkzeugs 21 von der Erfassungseinrichtung 30 erfasst wurden. Die Erfassungseinrichtung 30 hat hierzu mindestens einen Sensor zum Erfassen von physikalischen Größen, die beim Schweißen relevant sind und nachfolgend als die Daten 35 bezeichnet sind. Derartige physikalische Größen bzw. Daten 35 umfassen insbesondere eine Halte- und/oder Anpresskraft Fs zum Halten des Schweißwerkzeugs 21 an dem mindestens einen Bauteil 5, 6 und/oder Anpressen der Elektroden 22, 23 an das mindestens eine Bauteil 5, 6 beim Ausführen eines Schweißvorgangs zur Herstellung einer Schweißverbindung 7. Somit umfasst die Erfassungseinrichtung 30 insbesondere mindestens einen Kraftsensor.

Die Schweißsteuerung 10 hat ein Kraftregelmodul 11, ein Begrenzungsmodul 12 und ein Speichermodul 13. Das Kraftregelmodul 11 verwendet Daten 35, 131 für die Kraft Fs, die in dem Speichermodul 13 gespeichert sind, wie nachfolgend noch genauer beschrieben.

Für die Steuerung eines Schweißvorgangs mit dem Schweißwerkzeug 21 sind in der Schweißsteuerung 10, genauer gesagt ihrem Speichermodul 13, zudem interne Grundparameter bzw. Sollwerte bzw. Daten 131 gespeichert, die entweder ab Werk oder später mit Hilfe der Bedieneinrichtung 40 von einem Benutzer eingegeben werden können. Die internen Grundparameter oder Sollwerte 131 können Parameter des Schweißwerkzeugs 21 sein. Zudem können die internen Grundparameter oder Sollwerte 131 Parameter der Schweißsteuerung 10 sein, mit welchen das Schweißwerkzeug 21 gesteuert wird. Insbesondere sind die internen Grundparameter oder Sollwerte 131 ein Phasenanschnitt eines Schweißstroms Is und/oder ein Widerstand R des Schweißwerkzeugs 21 und/oder die Halte- und/oder Anpresskraft Fs. Der Schweißstrom Is wird dem Schweißwerkzeug 21 durch einen in Fig. 1 nicht dargestellten Schweißtransformator zugeführt. Dies ist in Bezug auf Fig. 2 näher beschrieben. Alle internen Grundparameter oder Sollwerte 131 sind als zeitlich abhängige Größen oder Soll-Zeitverläufe der jeweiligen Sollgrößen speicherbar. Somit sind insbesondere ein Is(t) und/oder ein Widerstand R(t) des Schweißwerkzeugs 21 und/oder die Halte- und/oder Anpresskraft Fs(t) speicherbar. Dabei sind kontinuierliche Zeitverläufe oder intermittierend festgelegte Zeitverläufe speicherbar.

Beim Führen des Schweißwerkzeugs 21 mit einem Arm 24 der Vorrichtung 20 wird die Vorrichtung 20 von ihrer Steuereinrichtung 25 gesteuert. Hierfür ist die Steuereinrichtung 25 mit der Schweißsteuerung 10 über die Kommunikationsleitung 43 verbunden. Optional ist die Steuereinrichtung 25 mit der Bedieneinrichtung 40 über eine Kommunikationsleitung 44 verbunden. Das Öffnen oder Schließen des Schweißwerkzeugs 21 erfolgt durch den Antrieb einer Antriebseinrichtung 26.

Zusätzlich oder alternativ ist die Steuereinrichtung 25 direkt mit der Erfassungseinrichtung 30 und/oder den elektrischen Komponenten des Schweißwerkzeugs 21 mit Hilfe einer Kommunikationsleitung 45 verbunden. Besteht kein Redundanzbedarf, ist es möglich, die Kommunikationsleitung 43 wegzulassen.

Über die Kommunikationsleitungen 42 bis 45 können relevante Daten für die Durchführung einer Schweißung mit dem Schweißwerkzeug 21 zwischen der Schweißsteuerung 10 und der Vorrichtung 20, genauer gesagt der Steuereinrichtung 25, und/oder der Bedieneinrichtung 40 ausgetauscht werden. Zudem können in der Steuereinrichtung 25 interne Grundparameter oder Sollwerte 251 der Steuereinrichtung 25 gespeichert sein, mit welchen das Schweißwerkzeug 21, insbesondere für seine Positionierung im Raum und daher an den Bauteilen 5, 6 gesteuert wird.

Fig. 2 zeigt den Aufbau der Elektroden 22, 23 des Schweißwerkzeugs 21 bei dem vorliegenden Ausführungsbeispiel genauer. Demzufolge ist die Elektrode 22 als Elektrodenschaft ausgebildet, der an seinem einen Ende mit einer Elektrodenkappe 220 versehen ist. Die Elektrodenkappe 220 ist an der Elektrode 22 an ihrem dem Bauteil 5 zugewandten Ende angeordnet. Außerdem ist die Elektrode 23 als Elektrodenschaft ausgebildet, der mit einer Elektrodenkappe 230 versehen ist. Die Elektrodenkappe 230 ist an der Elektrode 23 an ihrem dem Bauteil 6 zugewandten Ende angeordnet.

Das Schweißwerkzeug 21 kann mit einer sehr schematisch dargestellten Reinigungseinrichtung 60, die als Fräs- und/oder Schneideinrichtung oder Austauscheinrichtung ausgeführt sein kann, derart bearbeitet werden, dass der verschmutzte Teil einer der Elektrodenkappen 220, 230 bei Bedarf abgeschnitten oder abgefräst wird. Die Elektrodenkappen 220, 230 sind demzufolge Verschleißobjekte.

Im Betrieb des Schweißwerkzeugs 21 werden die Elektroden 22, 23 an einer zu verschweißenden Stelle an das mindestens eine Bauteil 5, 6 angeordnet und mit Hilfe einer Halte- und/oder Anpresskraft Fs an das mindestens eine Bauteil 5,6 angesetzt. Anders ausgedrückt, die beiden Elektroden 22, 23 spannen die Bauteile 5, 6 mit der Kraft Fs ein. Hierbei sind die Elektroden 22, 23 je nach Anzahl der bereits durchgeführten Fräs- und/oder Schneidvorgängen an den Elektrodenkappen 220, 230 unterschiedlich weit an das mindestens eine Bauteil 5, 6 zuzustellen, um die gewünschte Kraft Fs zu erzielen. Anschließend wird den Elektroden 22, 23 mit Hilfe eines Schweißtransformators 27 ein Schweißstrom Is für eine vorbestimmte Zeitdauer T und in einer vorbestimmten Charakteristik zugeführt. Hierfür wird der Strom Is mit definiertem Stromverlauf, insbesondere mindestens teilweise geregelt, zugeführt. Dadurch entsteht Wärme in dem mindestens einen Bauteil 5, 6, so dass sich eine Schweißlinse ausbildet, die später die Schweißverbindung 7 bildet.

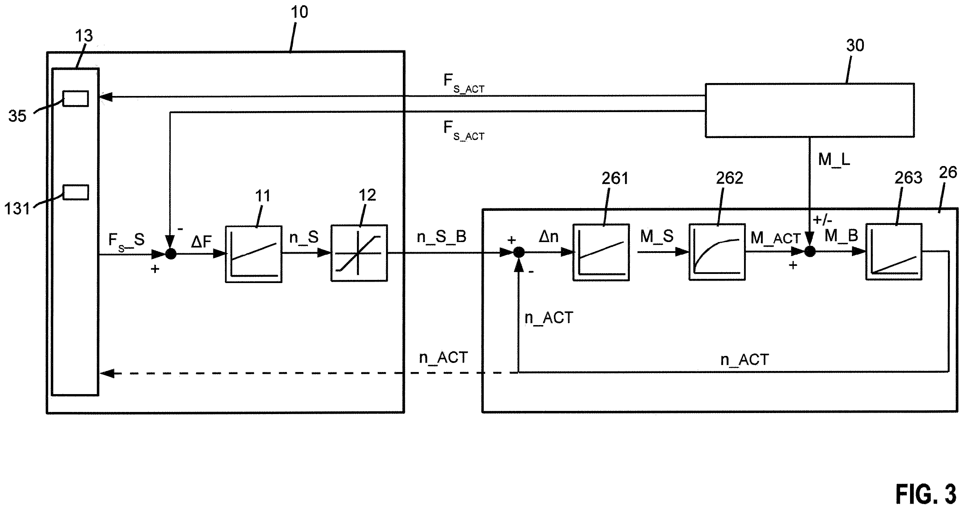

Fig. 3 veranschaulicht den Aufbau des mit der Schweißsteuerung 10 und der Antriebseinrichtung 26 gebildeten Regelkreises, mit welchem die Halte- und/oder Anpresskraft Fs bei einem Schweißvorgang mit dem Schweißwerkzeug 21 geregelt wird. Bei dem Schweißvorgang wird eine Schweißverbindung 7 hergestellt. Fig. 3 zeigt somit die Schweißsteuerung 10 und die Antriebseinrichtung 26 und deren Verschaltung mit der Erfassungseinrichtung 30 genauer.

In der Schweißsteuerung 10 ist dem Kraftregelmodul 11 das Begrenzungsmodul 12 nachgeschaltet. Das Kraftregelmodul 11 ist gemäß der Erfindung als PD-Regler ausgeführt. Der PD-Regler ist eine Kombination aus Proportionalregler und Differentialregler.

Bei Durchführung eines Schweißvorgangs wird dem Kraftregelmodul 11 die Differenz $\Delta F = F_{S\_S} - F_{S\_ACT}$ zugeführt. Hierbei ist $F_{S\_S}$ eine Sollgröße 131 für die Halte- und/oder Anpresskraft Fs, die in dem Speichermodul 13 gespeichert ist, und $F_{S\_ACT}$ ist eine von der Erfassungseinrichtung 30 beim Schweißvorgang erfasste Ist-Kraft der Halte- und/oder Anpresskraft Fs, die in den Daten 35 in dem Speichermodul 13 speicherbar ist.

Somit wird das Erfassungsergebnis der Kraft $F_{S\_ACT}$ wieder dem Kraftregelmodul 11 zugeführt. Das Kraftregelmodul 11 wirkt folglich auf die Differenz von Sollgröße, also der Soll-Kraft $F_{S\_S}(t)$ der Halte- und/oder Anpresskraft Fs, und der erfassten Ist-Kraft $F_{S\_ACT}$ der Halte- und/oder Anpresskraft Fs. In Folge dessen stellt sich eine Kraft $F_{S\_ACT}$ ein, die beim Schweißvorgang auf die Elektroden 22, 23 und somit auf das mindestens eine Bauteil 5, 6 wirkt.

Das Kraftregelmodul 11 gibt an das Begrenzungsmodul 12 eine Soll-Drehzahl n_S für die Antriebseinrichtung 26 aus. Das Begrenzungsmodul 12 rechnet die Soll-Drehzahl n_S in eine Bereichs-Soll-Drehzahl n_S_B um, die in einem vorbestimmten Bereich liegt, der in dem Begrenzungsmodul 12 parametriert ist. Beispielsweise umfasst der vorbestimmte Bereich Werte für die Soll-Drehzahlen von -40 bis 40. Selbstverständlich sind andere Werte wählbar. Das Begrenzungsmodul 12 gibt die Bereichs-Soll-Drehzahl n_S_B an die Antriebseinrichtung 26 aus, wie in Fig. 3 gezeigt.

In der Antriebseinrichtung 26 wird die Differenz $\Delta n = n\_S\_B - n_{ACT}$ gebildet und einem Drehzahlregelmodul 261 zugeführt. Hierbei ist n $_{ACT}$ eine von der Erfassungseinrichtung 30 beim Schweißvorgang erfasste Ist-Drehzahl der Antriebseinrichtung 26. Das Drehzahlregelmodul 261 ist insbesondere als PI-Regler ausgeführt.

Das Drehzahlregelmodul 261 gibt eine Stellgröße M_S an einen nachgeschalteten Stromregelkreis 262 aus. Das durch den Stromregelkreis bereitgestellte Istdrehmoment M $_{ACT}$ wird um das Lastmoment M $_L$ vermindert, sodass zur Beschleunigung das Beschleunigungsmoment M $_B$ zur Verfügung steht. Das Lastmoment M $_L$ ist abhängig von Störgrößeneinflüssen. Das Lastmoment M $_L$ kann einen positiven oder negativen Wert haben. Dies ist in Fig. 3 als +/- dargestellt. Somit wird der Wert des Istdrehmoments M $_{ACT}$ bei einem positiven Wert des Lastmoments M $_L$ vermindert. Dagegen wird der Wert des Istdrehmoments M $_{ACT}$ bei einem negativen Wert des Lastmoments M $_L$ vergrößert.

Die Istdrehzahl n $_{ACT}$ ergibt sich aus dem Beschleunigungsmoment M_B in folgender Weise:

$$n_{act} = n_{act,0} + \frac{1}{2\pi J_{ges}} \int M_B \, \mathrm{d}t$$

Hierbei ist n $_{ACT,0}$ eine bisherige Drehzahl und Jges das Gesamtträgheitsmoment. Diese Ist-Drehzahl n $_{ACT}$ wird an den Anfang des Regelkreises der Antriebseinrichtung 26 zurückgeführt, also zum Drehzahlregelmodul 261. Optional wird die Ist-Drehzahl n $_{ACT}$ auch in dem Speichermodul 13 der Schweißsteuerung 10 gespeichert. Beispielsweise umfasst die Ist-Drehzahl n $_{ACT}$ Werte von -36 bis 36. Selbstverständlich sind andere Werte wählbar.

Auf diese Weise können die Störgrößen ausgeregelt werden, die beim Durchführen eines Schweißvorgangs auftreten und sich beispielsweise als eine Kraftreduktion durch Schweißspritzer und/oder Kraftzunahme durch wärmebedingte Materialausdehnung, usw. bemerkbar machen. Außerdem kann von der Schweißsteuerung 10 eine zeitlich variierbare Soll-Kraft F $_S$ S(t) verwendet werden, die in dem Speichermodul 13 als Sollwert 131 gespeichert ist. Damit kann die Antriebseinrichtung 26 bei einem Schweißvorgang mit zeitlich unterschiedlichen Drehzahlen angesteuert werden, um ein Kraftprofil an dem mindestens einen Bauteil 5, 6 zu erzeugen. Damit ist eine individuelle Parametrierung der Soll-Kraft Fs_S(t) bei Schweißaufgaben entsprechend den Wünschen des Betreibers bzw. Bedieners der Schweißanlage 2 möglich.

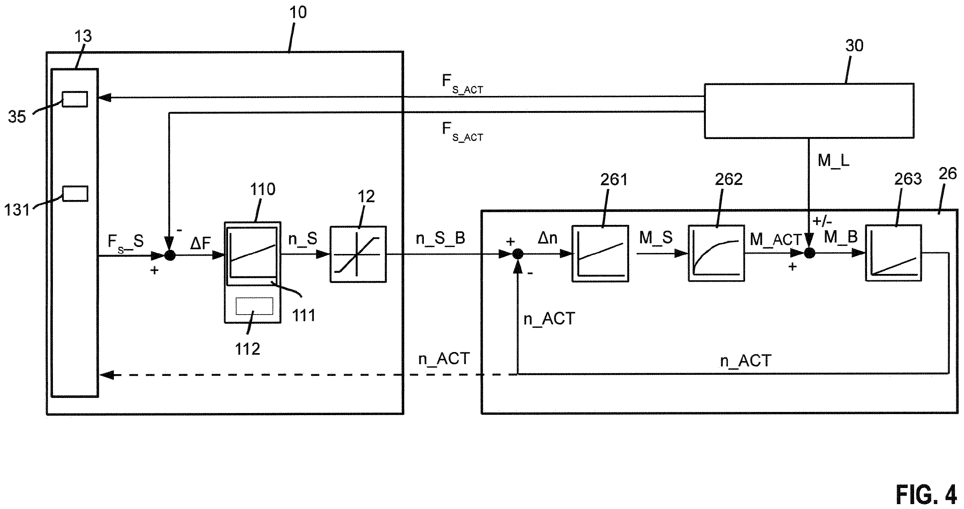

Fig. 4 zeigt einen Regelkreis gemäß einem zweiten Ausführungsbeispiel. Der Regelkreis ist bis auf den nachfolgenden Unterschied auf die gleiche Weise aufgebaut, wie zuvor für das erste Ausführungsbeispiel beschrieben.

Der Regelkreis von Fig. 4 hat ein Kraftregelmodul 110, das einen PD-Regler 111 und einen gleitenden Mittelwertfilter 112 aufweist. Das gleitende Mittelwertfilter 111 dient zur Glättung der Regelabweichung vor Berechnung des D-Anteils des PD-Reglers 111. Bei der Bildung des gleitenden Mittelwertes der Regelabweichung ΔF $_S$ wird der arithmetische Mittelwert der Regelabweichung ΔF $_S$ über die letzten n Zeitschritte gebildet, wobei n beispielsweise 5 sein kann. Dieser gleitende Mittelwert wird für die Berechnung des D-Anteils des Kraftregelmoduls 110 genutzt. Durch die gleitende Mittelwertbildung wird ein Schwingen des gesamten Systems durch verrauschte Kraftistwerte vermieden. Auf diese Weise kann die Qualität der Schweißverbindungen, die mit der Schweißanlage 2 hergestellt werden, noch weiter verbessert werden.

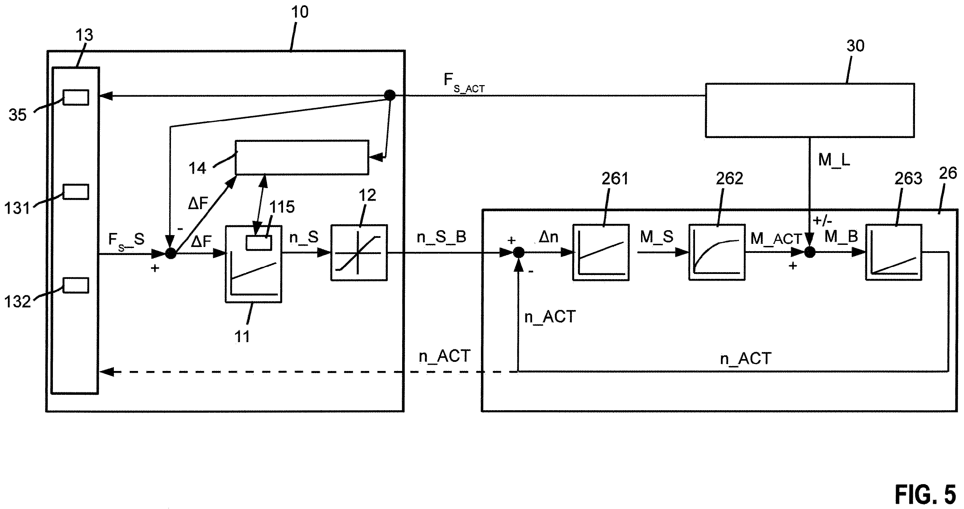

Fig. 5 zeigt einen Regelkreis gemäß einem dritten Ausführungsbeispiel. Der Regelkreis ist bis auf die nachfolgenden Unterschiede auf die gleiche Weise aufgebaut wie zuvor für das erste Ausführungsbeispiel beschrieben.

Der Regelkreis von Fig. 5 hat zusätzlich ein Auswertemodul 14, welches Regelparameter 115 des Kraftregelmoduls 11 einstellen kann, um Schwingungen der Kraft Fs zu reduzieren. Derartigen Kraftschwingungen können beim Schweißen mit dem Schweißwerkzeug 21 und/oder sonstigem Schließen des als Schweißzange ausgebildeten Schweißwerkzeugs 21 auftreten. Auswerteergebnisse 132 des Auswertemoduls 14 sind in dem Speichermodul 13 speicherbar.

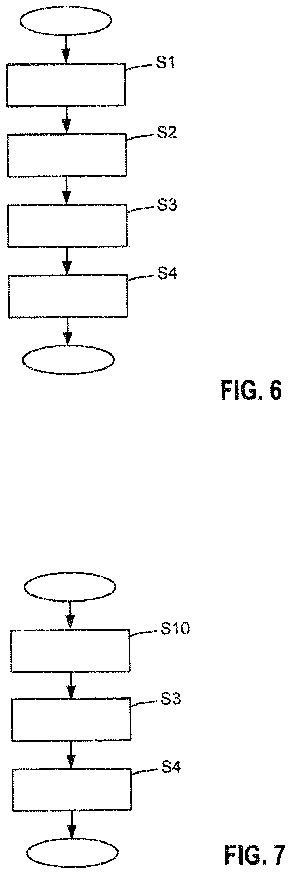

Hierfür ist das Auswertemodul 14 ausgestaltet, Kraftschwingungen durch Analyse der Regelabweichung ΔF $_S$ = F $_S$(t) - F $_{S\_ACT}$ zu erkennen. Hierbei geht das Auswertemodul 14 bei einem Verfahren zur Erkennung der Kraftschwingungen, das in Fig. 6 veranschaulicht ist, folgendermaßen vor. Das Verfahren zur Erkennung der Kraftschwingungen wird bei einem Schweißvorgang, also mit Beaufschlagung mit einem Schweißstrom, oder bei einem Servicevorgang, also ohne Beaufschlagung mit einem Schweißstrom, durchgeführt. Beispiele für einen solchen Servicevorgang sind/ist ein Servicevorgang zur Kraftprüfung und/oder zur Kraftskalierung. Bei derartigen Servicevorgängen wird eine Schweißzange als Schweißwerkzeug geschlossen, ohne dass Bauteil(e) zwischen den Elektroden der Schweißzange angeordnet sind und ohne dass elektrischer Strom eingeleitet wird.

Wie in Fig. 6 gezeigt, prüft das Auswertemodul 14 bei einem Schritt S1, ob die Regelabweichung ΔF $_S$ immer nach der gleichen Zeit t1 eine Nullstelle hat. Die Zeit t1 ist insbesondere die halbe Periodendauer einer Schwingung. Werden Nullstellen erkannt, geht der Fluss zu einem Schritt S2 weiter.

Bei dem Schritt S2 prüft das Auswertemodul 14, ob der Betrag |ΔF $_S$| der Regelabweichung ΔF $_S$ erhöht ist oder nicht. Somit führt das Auswertemodul 14 eine Prüfung der Amplitude der Schwingung durch. Ist der Betrag |ΔF $_S$| der Regelabweichung Fsi erhöht, erkennt das Auswertemodul 14 eine Schwingung, was als Auswerteergebnis 132 in dem Speichermodul 13 gespeichert werden kann. Danach geht der Fluss zu einem Schritt S3 weiter.

Bei dem Schritt S3 bricht die Schweißsteuerung 10, insbesondere ihr Auswertemodul 14, den derzeit durchgeführten Schweißvorgang ab. Außerdem gibt die Schweißsteuerung 10, insbesondere ihr Auswertemodul 14, optional eine Fehlermeldung als Meldung 48 aus, die mit der Bedieneinrichtung 40 angezeigt werden kann. Die Anzeige kann insbesondere optisch und/oder akustisch erfolgen. Danach geht der Fluss zu einem Schritt S4 weiter.

Bei dem Schritt S4 passt die Schweißsteuerung 10, insbesondere ihr Auswertemodul 14, die Reglerparameter 115 des Kraftregelmoduls 11 bzw. des PD-Reglers an, um in der Zukunft bei einem Schweißvorgang Schwingungen der Halte- und/oder Anpresskraft $F_S$ zu vermeiden. Hierbei wird insbesondere die Proportionalverstärkung des PD-Reglers reduziert. Somit findet eine automatische Anpassung der Reglerparameter 115 des Kraftregelmoduls 11, insbesondere seines PD-Reglers, statt. Danach ist das Verfahren beendet.

Bei dem nächsten Schweißablauf führt die Schweißsteuerung 10 die Regelung der Halte- und/oder Anpresskraft $F_S$ mit den Reglerparametern 115 des Kraftregelmoduls 11, insbesondere seines PD-Reglers, aus, die nun aufgrund des zuvor beschriebenen Verfahrens eingestellt sind. Bestenfalls sind die Reglerparameter 115 des Kraftregelmoduls 11, insbesondere seines PD-Reglers, nun bereits optimal eingestellt. Somit ist die zuvor in Bezug auf Schritt S4 beschriebene Anpassung der Reglerparameter 115 bereits beim nächsten Schweißvorgang der Schweißanlage 2 wirksam.

Die Schritte S1 und S2 des zuvor beschriebenen Verfahrens können zumindest zeitweise gleichzeitig durchgeführt werden. Alternativ dazu und zu dem zuvor beschriebenen Verfahren ist es möglich, den Schritt S1 nach dem Schritt S2 durchzuführen.

Fig. 7 veranschaulicht ein Verfahren zum Erkennen von Kraftschwingungen gemäß einem vierten Ausführungsbeispiel.

Hierbei ist die Schweißsteuerung 10 in weiten Teilen auf die gleiche Weise ausgeführt wie für die Schweißsteuerung 10 gemäß dem vorangehenden Ausführungsbeispiel beschrieben. Daher sind im Folgenden nur die Unterschiede des vorliegenden Ausführungsbeispiels zu dem vorangehenden Ausführungsbeispiel beschrieben.

Bei dem vorliegenden Ausführungsbeispiel wertet das Auswertemodul 14 nicht die Regelabweichung $\Delta F_S$ aus, wie für das Auswertemodul 14 bei dem vorangehenden Ausführungsbeispiel beschrieben. Stattdessen wertet die Schweißsteuerung 10, insbesondere ihr Auswertemodul 14, das Frequenzspektrum der Ist-Kraft $F_{S\_ACT}$ aus. Somit führt die Schweißsteuerung 10, insbesondere ihr Auswertemodul 14, das Verfahren aus, wie in Fig. 7 gezeigt.

Wie in Fig. 7 gezeigt, führt die Schweißsteuerung 10, insbesondere ihr Auswertemodul 14, einen Schritt S10 anstelle der Schritte S1 und S2 von Fig. 6 aus. Bei dem Schritt S10 führt die Schweißsteuerung 10, insbesondere ihr Auswertemodul 14, eine Erkennung von Kraftschwingungen der Halte- und/oder Anpresskraft Fs durch Analyse des Frequenzspektrums der Ist-Kraft $F_{S\_ACT}$ aus. Hierbei verwendet die Schweißsteuerung 10, insbesondere ihr Auswertemodul 14, eine FFT-Analyse (FFT = Fast Fourier Transformation). Sind in dem Frequenzspektrum der Ist-Kraft $F_{S\_ACT}$ Maxima erkennbar, dann deutet dies auf eine Schwingung hin. Somit wertet das Auswertemodul 14 die Maxima als ein Vorliegen einer Kraftschwingung. Zudem geht der Fluss, wenn in dem Frequenzspektrum der Ist-Kraft $F_{S\_ACT}$ Maxima erkennbar sind, zu dem Schritt S3 weiter.

Bei dem nachfolgenden Schritt S3 und dem daran anschließenden Schritt S4 wird wieder vorgegangen, wie zuvor in Bezug auf Fig. 6 beschrieben.

Auf diese Weise kann die Schweißsteuerung 10 bei dem nächsten Schweißablauf die Regelung der Halte- und/oder Anpresskraft $F_S$ mit den Reglerparametern 115 des Kraftregelmoduls 11, insbesondere ihres PD-Reglers, ausführen, die nun aufgrund des zuvor beschriebenen Verfahrens eingestellt sind. Bestenfalls sind die Reglerparameter 115 des Kraftregelmoduls 11, insbesondere seines PD-Reglers, nun bereits optimal eingestellt.

Somit ist es auch bei dem vorliegenden Ausführungsbeispiel möglich, die zuvor in Bezug auf Schritt S4 beschriebene Anpassung der Reglerparameter 115 bereits beim nächsten Schweißvorgang der Schweißanlage 2 wirksam werden zu lassen.

Gemäß einem fünften Ausführungsbeispiel ist das Auswertemodul 14 ausgestaltet, die Auswertung gemäß dem Verfahren von Fig. 6 und Fig. 7 durchzuführen. Durch die Kombination der Auswertungen, wie zuvor in Bezug auf Fig. 6 und Fig. 7 beschrieben, ist eine noch bessere und/oder sicherere Erkennung und Reaktion auf Kraftschwingungen durchführbar.

Alle zuvor beschriebenen Ausgestaltungen der Schweißanlage 2, der Schweißsteuerung 10, des Kraftregelmoduls 11, des Auswertemoduls 14 und des Verfahrens können einzeln oder in allen möglichen Kombinationen Verwendung finden. Insbesondere können alle Merkmale und/oder Funktionen der zuvor beschriebenen Ausführungsbeispiele beliebig kombiniert werden. Zusätzlich sind insbesondere folgende Modifikationen denkbar.

Die in den Figuren dargestellten Teile sind schematisch dargestellt und können in der genauen Ausgestaltung von den in den Figuren gezeigten Formen abweichen, solange deren zuvor beschriebenen Funktionen gewährleistet sind.

Das Schweißwerkzeug 21 muss nicht als Schweißzange ausgeführt sein, sondern kann auch nur eine Schweißelektrode 22 oder 23 usw. aufweisen.

Optional kann auf beiden Seiten, also nicht nur bei der Elektrode 22 oder nur bei der Elektrode 23, sondern über die beiden Elektroden 22, 23 eine entsprechende Einleitung von Kräften Fs erfolgen.

**Patentansprüche**

1. Schweißsteuerung (10) für ein Schweißwerkzeug (21), mit einem Speichermodul (13), mit einem Kraftregelmodul (11) zum Regeln eines Verlaufs einer Halte- und/oder Anpresskraft ($F_S(t)$; $F_{S\_ACT}$), welche mindestens eine Elektrode (22, 23) eines Schweißwerkzeugs (21) beim Herstellen einer Schweißverbindung (7) auf mindestens ein Bauteil (5, 6) ausübt,
   **dadurch gekennzeichnet, dass**
   das Kraftregelmodul (11) ausgestaltet ist, bei Durchführung eines Schweißvorgangs oder Servicevorgangs eine Differenz $\Delta F = Fs\_s - F_{S\_ACT}$ zu berechnen, bei welcher Fs_s eine Sollgröße (131) für die Halte- und/oder Anpresskraft ($F_S(t)$) ist, die als zeitlich abhängige Sollgröße in dem Speichermodul (13) gespeichert ist, und $F_{S\_ACT}$ eine von einer Erfassungseinrichtung (30) bei dem durchgeführten Schweißvorgang oder Servicevorgang erfasste Ist-Kraft der Halte- und/oder Anpresskraft ($F_S(t)$) ist, wobei das Kraftregelmodul (11) als PD-Regler ausgeführt ist, und wobei das Kraftregelmodul (11) ausgestaltet ist, mindestens einen Drehzahlsollwert ($n\_S$) an eine Antriebseinrichtung (26) des Schweißwerkzeugs (21) auszugeben, um den Antrieb des Schweißwerkzeugs (21) zum Aufbringen der Halte- und/oder Anpresskraft ($F_S(t)$; $F_{S\_ACT}$) mit einem Drehzahlregler (261) der Antriebseinrichtung (26) zu regeln, wobei ein Schweißvorgang ein Vorgang mit einer Beaufschlagung mit einem Schweißstrom ist, und wobei ein Servicevorgang ein Vorgang ohne Beaufschlagung mit einem Schweißstrom ist.

2. Schweißsteuerung (10) nach Anspruch 1, wobei das Kraftregelmodul (11) ein gleitendes Mittelwertfilter (112) zur Glättung einer Regelabweichung ($\Delta F$) vor Berechnung eines D-Anteils des PD-Reglers (111) aufweist.

3. Schweißsteuerung (10) nach Anspruch 1 oder 2, zudem mit einem Auswertemodul (14) zur Auswertung der Regelung des Kraftregelmoduls (11), wobei das Auswertemodul (14) ausgestaltet ist, mindestens einen Reglerparameter (115) des Kraftregelmoduls (11) zu ändern, wenn die Auswertung der Regelung des Kraftregelmoduls (11) ergibt, dass der Verlauf der Kraft ($Fs(t)$; $F_{S\_ACT}$) Schwingungen aufweist.

4. Schweißsteuerung (10) nach Anspruch 3, wobei das Auswertemodul (14) ausgestaltet ist, den zeitlichen Verlauf der Regelabweichung ($F_{S1}$) auszuwerten, um zu bestimmen, ob der Verlauf der Kraft ($F_S(t)$; $F_{S\_ACT}$) Schwingungen aufweist

5. Schweißsteuerung (10) nach Anspruch 3 oder 4, wobei das Auswertemodul (14) ausgestaltet ist, den zeitlichen Verlauf der Regelabweichung ($F_{S1}$) in Bezug auf Periodendauer und Amplitude auszuwerten.

6. Schweißsteuerung (10) nach Anspruch 4 oder 5, wobei das Auswertemodul (14) ausgestaltet ist, das Frequenzspektrum der Ist-Kraft ($F_{S\_ACT}$) auf Maxima auszuwerten, um zu bestimmen, ob der Verlauf der Kraft ($F_S(t)$; $F_{S\_ACT}$) Schwingungen aufweist.

7. Schweißsteuerung (10) nach einem der Ansprüche 3 bis 6, wobei das Auswertemodul (14) ausgestaltet ist, die Proportionalverstärkung des PD-Reglers (111) zu ändern, wenn die Auswertung der Regelung des Kraftregelmoduls (11) ergibt, dass der Verlauf der Kraft ($Fs(t)$; $F_{S\_ACT}$) Schwingungen aufweist.

8. Schweißsteuerung (10) nach einem der Ansprüche 3 bis 7, wobei das Auswertemodul (14) ausgestaltet ist, den derzeit ausgeführten Schweißverlauf abzubrechen, wenn die Auswertung der Regelung des Kraftregelmoduls (11) ergibt, dass der Verlauf der Kraft ($Fs(t)$; $F_{S\_ACT}$) Schwingungen aufweist.

9. Schweißsteuerung (10) nach einem der Ansprüche 3 bis 8, wobei das Auswertemodul (14) ausgestaltet ist, eine Meldung (48) auszugeben, wenn die Auswertung der Regelung des Kraftregelmoduls (11) ergibt, dass der Verlauf der Kraft ($F_S(t)$; $F_{S\_ACT}$) Schwingungen aufweist.

10. Schweißanlage (2), mit einem Schweißwerkzeug (21), das mindestens eine Elektrode (22, 23) zum Herstellen einer Schweißverbindung (7) an mindestens einem Bauteil (5, 6) aufweist, einer Antriebseinrichtung (26) zum Antrieb des Schweißwerkzeugs (21) zum Aufbringen einer Kraft ($Fs(t)$; $F_{S\_ACT}$), welche die mindestens eine Elektrode (22, 23) beim Herstellen einer Schweißverbindung (7) auf das mindestens ein Bauteil (5, 6) ausübt, wobei die Antriebseinrichtung (26) einen Drehzahlregler (261) aufweist, einer Erfassungseinrichtung (30) zum Erfassen einer Ist-Kraft der Halte- und/oder Anpresskraft ($Fs(t)$) bei einem durchgeführten Schweißvorgang oder Servicevorgang,
    und **gekennzeichnet durch**:
    eine Schweißsteuerung (10) nach einem der vorangehenden Ansprüche zur Steuerung eines Herstellens einer Schweißverbindung (7) mit dem Schweißwerkzeug (21).

**11.** Schweißanlage (2) nach Anspruch 10, wobei das Schweißwerkzeug (21) ein Widerstandsschweißwerkzeug ist, das als Schweißzange mit zwei Elektroden (22, 23) ausgestaltet ist.

**12.** Verfahren zur Kraftregelung eines Schweißwerkzeugs (21),
**dadurch gekennzeichnet, dass**
das Verfahren die Schritte aufweist Regeln, mit einem Kraftregelmodul (11), das als PD-Regler ausgeführt ist, eines Verlaufs einer Halte- und/oder Anpresskraft (Fs(t); $F_{S\_ACT}$), welche mindestens eine Elektrode (22, 23) eines Schweißwerkzeugs (21) beim Herstellen einer Schweißverbindung (7) auf mindestens ein Bauteil (5, 6) ausübt, wobei das Kraftregelmodul (11) mindestens einen Drehzahlsollwert (n_S) an eine Antriebseinrichtung (26) des Schweißwerkzeugs (21) ausgibt, und Regeln, mit einem Drehzahlregler (261) der Antriebseinrichtung (26), des Antriebs des Schweißwerkzeugs (21) zum Aufbringen der Halte- und/oder Anpresskraft (Fs(t); $F_{S\_ACT}$) unter Verwendung des von dem Kraftregelmodul (11) ausgegebenen mindestens einen Drehzahlsollwerts (n_S), wobei das Kraftregelmodul (11) ausgestaltet ist, bei Durchführung eines Schweißvorgangs oder Servicevorgangs eine Differenz $\Delta F = Fs\_s - F_{S\_ACT}$ zu berechnen, bei welcher Fs_s eine Sollgröße (131) für die Halte- und/oder Anpresskraft ($F_S(t)$) ist, die als zeitlich abhängige Sollgröße in einem Speichermodul (13) gespeichert ist, und $F_{S\_ACT}$ eine von einer Erfassungseinrichtung (30) bei dem durchgeführten Schweißvorgang oder Servicevorgang erfasste Ist-Kraft der Halte- und/oder Anpresskraft ($F_S(t)$) ist, wobei ein Schweißvorgang ein Vorgang mit einer Beaufschlagung mit einem Schweißstrom ist, und wobei ein Servicevorgang ein Vorgang ohne Beaufschlagung mit einem Schweißstrom ist.

**Claims**

**1.** Welding control (10) for a welding tool (21), with a memory module (13), and with a force control module (11) for controlling a progression of a holding and/or pressing force ($F_S(t)$; $F_{S\_ACT}$), which at least one electrode (22, 23) of a welding tool (21) exerts on at least one component (5, 6) when producing a welded connection (7),

**characterized in that**
the force control module (11) is designed to calculate a difference $\Delta F = F_{S-S} - F_{S\_ACT}$ when carrying out a welding operation or a servicing operation, where $F_{S-S}$ is a setpoint variable (131) for the holding and/or pressing force ($F_S(t)$), which is stored in the memory module (13) as a time-dependent setpoint variable, and $F_{S\_ACT}$ is an actual force of the holding and/or pressing force ($F_S(t)$) detected by a detecting device (30) during the welding operation or servicing operation carried out,
the force control module (11) being configured as a PD controller, and
the force control module (11) being designed to output at least one rotational-speed setpoint value (n_S) to a driving device (26) of the welding tool (21) in order to control the drive of the welding tool (21) for applying the holding and/or pressing force ($F_S(t)$; $F_{S\_ACT}$) by a speed controller (261) of the driving device (26), a welding operation being an operation with a welding current being applied, and a servicing operation being an operation without a welding current being applied.

**2.** Welding control (10) according to Claim 1, the force control module (11) having a moving average filter (112) for smoothing a system deviation ($\Delta F$) before calculation of a D component of the PD controller (111) .

**3.** Welding control (10) according to Claim 1 or 2, also with an evaluating module (14) for evaluating the control of the force control module (11), the evaluating module (14) being designed to change at least one controller parameter (115) of the force control module (11) if the evaluation of the control of the force control module (11) finds that the progression of the force ($F_S(t)$; $F_{S\_ACT}$) has oscillations.

**4.** Welding control (10) according to Claim 3, the evaluating module (14) being designed to evaluate the progression over time of the system deviation ($F_{S1}$) in order to determine whether the progression of the force ($F_S(t)$; $F_{S\_ACT}$) has oscillations.

**5.** Welding control (10) according to Claim 3 or 4, the evaluating module (14) being designed to evaluate the progression over time of the system deviation ($F_{S1}$) with reference to the period duration and the amplitude.

**6.** Welding control (10) according to Claim 4 or 5, the evaluating module (14) being designed to evaluate the frequency spectrum of the actual force ($F_{S\_ACT}$) for maxima in order to determine whether the progression of the force ($F_S(t)$; $F_{S\_ACT}$) has oscillations.

7. Welding control (10) according to one of Claims 3 to 6, the evaluating module (14) being designed to change the proportional gain of the PD controller (111) if the evaluation of the control of the force control module (11) finds that the progression of the force ($F_S(t)$; $F_{S\_ACT}$) has oscillations.

8. Welding control (10) according to one of Claims 3 to 7, the evaluating module (14) being designed to break off the welding procedure being carried out at the time if the evaluation of the control of the force control module (11) finds that the progression of the force ($F_S(t)$; $F_{S\_ACT}$) has oscillations.

9. Welding control (10) according to one of Claims 3 to 8, the evaluating module (14) being designed to output a message (48) if the evaluation of the control of the force control module (11) finds that the progression of the force ($F_S(t)$; $F_{S\_ACT}$) has oscillations.

10. Welding system (2), with a welding tool (21), which has at least one electrode (22, 23) for producing a welded connection (7) on at least one component (5, 6), with a driving device (26) for driving the welding tool (21) for applying a force ($F_S(t)$; $F_{S\_ACT}$), which the at least one electrode (22, 23) exerts on the at least one component (5, 6) when producing a welded connection (7), the driving device (36) having a rotational-speed controller (261), and with a detecting device (30) for detecting an actual force of the holding and/or pressing force ($FS(t)$) during a welding operation or servicing operation carried out,
and **characterized by**:
a welding control (10) according to one of the preceding claims for controlling a process of producing a welded connection (7) with the welding tool (21).

11. Welding system (2) according to Claim 10, the welding tool (21) being a resistance welding tool, which is designed as a welding gun with two electrodes (22, 23).

12. Method for controlling the force of a welding tool (21), **characterized in that**
the method comprises the steps of controlling, with a force control module (11) which is configured as a PD controller, a progression of a holding and/or pressing force ($FS(t)$; $FS\_ACT$), which at least one electrode (22, 23) of a welding tool (21) exerts on at least one component (5, 6) when producing a welded connection (7), the force control module (11) outputting at least one rotational-speed setpoint value ($n\_S$) to a driving device (26) of the welding tool (21), and controlling, with a rotational-speed controller (261) of the driving device (26), the drive of the welding tool (21) for applying the holding and/or pressing force ($FS(t)$; $FS\_ACT$) while using the at least one rotational-speed setpoint value ($n\_S$) output by the force control module (11), the force control module (11) being designed to calculate a difference $\Delta F = F_{S\text{-}S} - F_{S\_ACT}$ when carrying out a welding operation or a servicing operation, where $F_{S\text{-}S}$ is a setpoint variable (131) for the holding and/or pressing force ($F_S(t)$), which is stored in a memory module (13) as a time-dependent setpoint variable, and $F_{S\_ACT}$ is an actual force of the holding and/or pressing force ($F_S(t)$) detected by a detecting device (30) during the welding operation or servicing operation carried out, a welding operation being an operation with a welding current being applied, and a servicing operation being an operation without a welding current being applied.

**Revendications**

1. Commande de soudage (10) destinée à un outil de soudage (21), ladite commande comprenant un module de mémorisation (13), un module de régulation de force (11) destiné à réguler la variation d'une force de maintien et/ou de pressage ($F_s(t)$ ; $F_{s\_ACT}$), qu'au moins une électrode (22, 23) d'un outil de soudage (21) exerce sur au moins un composant (5, 6) lors de la réalisation d'une liaison soudée (7),

   **caractérisée en ce que**
   le module de régulation de force (11) est conçu pour calculer lors de la réalisation d'un processus de soudage ou d'un processus de service une différence $\Delta F = F_{s\_s} - F_{s\_ACT}$ pour laquelle $F_{s\_s}$ est une grandeur de consigne (131) pour la force de maintien et/ou de pressage ($F_s(t)$) qui est mémorisée en tant que grandeur de consigne dépendant du temps dans le module de mémorisation (13) et $F_{s\_ACT}$ est une force réelle de la force de maintien et/ou de pressage ($F_s(t)$) qui est détectée par un dispositif de détection (30) pendant le processus de soudage ou le processus de service,

   le module de régulation de force (11) étant conçu comme un régulateur PD, et
   le module de régulation de force (11) étant conçu pour délivrer au moins une valeur de consigne de vitesse de rotation (n_S) à un dispositif d'entraînement (26) de l'outil de soudage (21) afin de réguler l'entraînement de l'outil de soudage (21) avec un régulateur de vitesse de rotation (261) du dispositif d'entraînement (26) afin d'appliquer la force de maintien et/ou de pressage ($F_s(t)$ ; $F_{s\_ACT}$), un processus de soudage étant un processus avec application d'un courant de soudage, et un processus de service étant un processus sans application de courant de soudage.

2. Commande de soudage (10) selon la revendication 1, le module de régulation de force (11) comportant un filtre à valeur moyenne glissante (112) destiné à lisser un écart de régulation (AF) avant de calculer une composante D du régulateur PD (111).

3. Commande de soudage (10) selon la revendication 1 ou 2, comprenant également un module d'évaluation (14) destiné à évaluer la régulation du module de régulation de force (11), le module d'évaluation (14) étant conçu pour modifier au moins un paramètre de régulateur (115) du module de régulation de force (11) si l'évaluation de la régulation du module de régulation de force (11) montre que la variation de la force ($F_s(t)$ ; $F_{s\_ACT}$) comporte des oscillations.

4. Commande de soudage (10) selon la revendication 3, le module d'évaluation (14) étant conçu pour évaluer la variation dans le temps de l'écart de régulation ($F_{s1}$) afin de déterminer si la variation de la force ($F_s(t)$ ; $F_{s\_ACT}$) comporte des oscillations.

5. Commande de soudage (10) selon la revendication 3 ou 4, le module d'évaluation (14) étant conçu pour évaluer la variation dans le temps de l'écart de régulation ($F_{s1}$) en fonction de la période et de l'amplitude.

6. Commande de soudage (10) selon la revendication 4 ou 5, le module d'évaluation (14) étant conçu pour évaluer le spectre de fréquence de la force réelle ($F_{s\_ACT}$) à des maxima afin de déterminer si la variation de la force ($F_s(t)$ ; $F_{s\_ACT}$) comporte des oscillations.

7. Commande de soudage (10) selon l'une des revendications 3 à 6, le module d'évaluation (14) étant conçu pour modifier le gain proportionnel du régulateur PD (111) lorsque l'évaluation de la régulation du module de régulation de force (11) montre que la variation de la force ($F_s(t)$ ; $F_{s\_ACT}$) comporte des oscillations.

8. Commande de soudage (10) selon l'une des revendications 3 à 7, le module d'évaluation (14) étant conçu pour interrompre le processus de soudage en cours si l'évaluation de la régulation du module de régulation de force (11) montre que la force ($F_s(t)$ ; $F_{s\_ACT}$) comporte des oscillations.

9. Commande de soudage (10) selon l'une des revendications 3 à 8, le module d'évaluation (14) étant conçu pour délivrer un message (48) lorsque l'évaluation de la régulation du module de régulation de force (11) montre que la variation de la force ($F_s(t)$ ; $F_{s\_ACT}$) comporte des oscillations.

10. Installation de soudage (2) comprenant un outil de soudage (21) qui comporte au moins une électrode (22, 23) destinée à réaliser une liaison soudée (7) sur au moins un composant (5, 6), un dispositif d'entraînement (26) destiné à entraîner l'outil de soudage (21) pour appliquer une force ($F_s(t)$ ; $F_{s\_ACT}$) que l'au moins une électrode (22, 23) exerce sur l'au moins un composant (5, 6) lors de la réalisation d'une liaison soudée (7), le dispositif d'entraînement (26) comportant un régulateur de vitesse de rotation (261), un dispositif de détection (30) destiné à détecter une force réelle de la force de maintien et/ou de pressage ($F_s(t)$) lorsqu'un processus de soudage ou un processus de service est réalisé,
et **caractérisé par** :
une commande de soudage (10) selon l'une des revendications précédentes destinée à commander la réalisation d'une liaison soudée (7) avec l'outil de soudage (21).

11. Installation de soudage (2) selon la revendication 10, l'outil de soudage (21) étant un outil de soudage à résistance qui est conçu comme une pince à souder munie de deux électrodes (22, 23).

12. Procédé de régulation de force d'un outil de soudage (21), **caractérisé en ce que**
le procédé comprend les étapes suivantes : réguler, au moyen d'un module de régulation de force (11) qui est conçu comme un régulateur PD, une variation d'une force de maintien et/ou de pressage ($F_s(t)$ ; $F_{s\_ACT}$) qu'au moins une électrode (22, 23) d'un outil de soudage (21) exerce sur au moins un composant (5, 6) lors de la réalisation d'une liaison soudée (7), le module de régulation de force (11) délivrant au moins une valeur de consigne de vitesse de rotation (n_S) à un dispositif d'entraînement (26) de l'outil de soudage (21), et réguler, au moyen d'un régulateur de vitesse de rotation (261) du dispositif d'entraînement (26), l'entraînement de l'outil de soudage (21) pour appliquer la force de maintien et/ou de pressage ($F_s$(t) ; $F_{s\_ACT}$) à l'aide de l'au moins une valeur de consigne de vitesse de rotation (n_S) délivrée par le module de régulation de force (11), le module de régulation de force (11) étant conçu pour calculer lors de la réalisation d'un processus de soudage ou d'un processus de service une différence $\Delta F = F_{s\_s} - F_{s\_ACT}$ pour laquelle $F_{s\_s}$ est une grandeur de consigne (131) pour la force de maintien et/ou de pressage ($F_s$(t)) qui est mémorisée en tant que grandeur de consigne dépendant du temps dans un module de mémorisation (13) et $F_{s\_ACT}$ est une force réelle de la force de maintien et/ou de pressage ($F_s$(t)) qui est détectée par un dispositif de détection (30) lorsque le processus de soudage ou le processus de service est réalisé, un processus de soudage étant un processus avec application d'un courant de soudage, et un processus de service étant un processus sans application de courant de soudage.

FIG. 1

FIG. 2

FIG. 3

**FIG. 4**

EP 3 760 359 B1

FIG. 5

FIG. 6

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10144731 A1
- DE 10060055 A1
- JP H05261558 A
- CN 102267003 A